# EUROPEAN PATENT APPLICATION

(11) **EP 2 085 449 A1**
(43) Date of publication of application: **05.08.2009**
(21) Application number: 07150477.3
(22) Date of filing: 28.12.2007
(51) Int. Cl.: C09K 8/467, C09K 8/487, C04B 14/38, C04B 16/06

(54) **Cement composition comprising mixture of organic and inorganic fibres for curing severe losses especially in the reservoir section**

(71) Applicant: Services Pétroliers Schlumberger, 75007 Paris (FR); Schlumberger Holdings Limited, Road Town, Tortola (VG); Schlumberger Technology B.V., 2514 JG The Hague (NL); PRAD Research and Development N.V., Willemstad, Curacao (AN)
(72) Inventor: Ghassemzadeh, Jaleh, 14859-48351 Tehran (IR); Guiollard, France Etudes et Productions Schlumberger SA, 92142, Clamart (FR); Caritey, Jean-Philippe Etudes et Productions Schlumberger SA, 92142, Clamart (FR)
(74) Representative: Hyden, Martin Douglas

(57) **Abstract**

Disclosed is a method for controlling loss circulation and simultaneously strengthening a weakened formation when drilling for oil. This invention relates to the permeable subterranean formation and natural and induced fractured formations that encounter severe losses and their treatment with a composition composed of long rigid organic fibre with different type of fibres selected from a category of organic or inorganic fibres along with different particle sizes that orientation of fibres and packing of the solids shows a good blockage effect to resist the loss and later the final set material develop required compressive strength to cure those losses and strengthening the structure.

## Description

### Technical Field

This invention relates to cement compositions suitable for use in controlling lost circulation and simultaneously strengthening a weakened formation when drilling for oil and gas. In particular, the invention is applicable to uses in permeable subterranean formations and natural and induced fractured formations that encounter severe losses and provides methods of treatment with a composition comprising fibres and different particle sizes that can develop required compressive strength to cure those losses and strengthening the structure. The composition can be removed when it is desired with acidic fluids.

### Background Art

Fluids are used during operations which occur during the life of an oil and gas wellbore, such as drilling the wellbore, completion and workover. These fluids enable such operations to be carried out, and can be lost to permeable subterranean formations during use in a phenomenon known as 'lost circulation'.

The formations above a hydrocarbon reservoir typically comprise different layers of formations with openings ranging from small holes to fractures up to large-scale fissures. As an example, during the drilling of a well, drilling fluid can flow through these openings into the formations and depending on severity can result in the complete cessation of circulation. Such openings have to be sealed before drilling can be resumed. In the reservoir, the characteristics of the formation such as permeability need to be adjusted to ensure successful well production. When losses occur in this zone, treatments are used to recover the initial properties of the reservoir.

During completion, including during cementing operations, fluid loss into the formation can damage the reservoir and can later create difficulties for accessing the production zone. If left untreated, fluid loss can leave incomplete isolation by not reaching to the required depth for the top of the cement. Damage to the wellbore during completion can increase the skin of the wellbore and increase the pressure required for performing perforation and fracturing the wellbore.

Solving lost circulation problems can be difficult, especially in the reservoir section where permeability and porosity have to be restored. It is most desirable to close the channel or passage through which losses occur as soon as possible. A suitable material for curing circulation loss should have the required compressive strength, relatively little reaction with water, and be able to function as a strong barrier against the influx of water and other fluids. The following documents disclose various methods of decreasing loss of fluids during well drilling, completion and/or workover operations: US 2001/0,053,749 A1, US 6,664,215 B1, US 2004/0,040,711 A1, EP 0,582,367 A1, US 2004/0163812 A1, WO 2004/076,809 A1, US 2005/0038164 A1, US 2005/0241827 A1, US 3,816,148 A, US 5,220,960 A, US 5,298,069 A, US 5,220,960 A, US 5,281,270 A, and WO 03/014040 A1.

One way to cure lost circulation is to add lost circulation materials (LCMs) with different sizes, such as granular, flake, or fibrous materials, to the drilling fluid. The LCMs physically obscure the passage of the loss of fluid, but are inefficient during severe circulation loss because they lack strength as blocking materials and because of how their particles are physically packed.

An alternative method to cure lost circulation is to place a conventional cement plug in the loss zone to fill the openings and fissures. This method of curing lost circulation is more effective than the use of LCMs but can cause permanent damage to a reservoir, and once a plug is placed it has to be removed. If unsuitable slurries are used, many plug placements may be required and this would result in the use of larger amounts of cement. A successful plugging composition should contain right combination of settable material, different sizes of particulate materials, fiber or a combination of fibres with specific properties. An increase of the skin around the wellbore, which is very important in the reservoir section, arises from the loss of slurry into the formation and the requirement for larger amounts of cement.

Many of the following documents focus on magnesium-based cements, such as Sorel, oxychloride and oxysulfate cements, an example of which is Thermatek, by Halliburton. This product has a very low viscosity so as to penetrate in to the formation. Since the trigger for its reaction is temperature related, the product can penetrate far beyond in the reservoir. Acid solubility of this invention is diffusion limited and may need longer times for recovering the formation from the set material.

Magnesium-based cements produce a lot of heat as the result of temperature-initiated exothermic reactions, and a limitation when using these cements is that high heat generation during setting may result in fractures in the set material.

Another limitation when using these cements is due to their properties, it is difficult to create compositions with different densities, and additional processes such as foaming are required to create e.g. lighter slurry. Additionally, magnesium-based cements are more reactive with water when compared to other types of cement, and some magnesium-based cements with viscosity close to water can diffuse and further penetrate into the formation.

When set, cement slurry that has been mixed with fibres and which contains an enhanced particle size distribution makes for a stronger, more efficient cement plug (SPE 84617, WO 03/014040). Slurries with an acceptable viscosity and a high solids content can cure severe losses in combination with the right choice and amount of fibre(s). The following documents disclose the use of fibre combinations: US 2007/0056730 A1, US 2005/0241827 A1, US 20060169453 A1, US 20060169452 A1, WO 2006082356 A1, WO 2006082362 A1, US 20060169454 A1, US 20060169448 A1, US 2006/0169451 A1, US 20060172894 A1, US 20060172895 A1, US 2006/0169450 A1, US 2006/0169449 A1, WO2006079776 A1, and WO2006079779 A1.

Other publications relating to this subject include SPE 84617, IADC/SPE 23929, SPE 18031, SPE 25543, and SPE 90496.

### Disclosure of Invention

A first aspect of the invention provides a cement composition comprising a mixture of a blend including cement and/or micro cement, carbonates, coarse particles, one or more fibre materials; and water; wherein the coarse particles comprise at least one material with an average particle size of 300-1200 microns.

One preferred embodiment of the invention is a composition comprising fine and coarse calcium carbonate, cement of medium particle size, inorganic fibres and rigid fibres including water-insoluble polyvinyl alcohol polymers. The properties of the slurry can be adjusted with additives to fit the required properties to cure lost circulation. The other preferred embodiment of the invention is a composition comprising a fine particles micro-cement or a mixture of micro-cement with fine calcium carbonate, cement as medium particle size, and coarse calcium carbonate, inorganic fibres and rigid fibres including water-insoluble polyvinyl alcohol. For lower densities micro-spheres are used. The compositions can be used with a blend of different length polyvinyl alcohol fibres that are soluble in water at high temperatures.

In another embodiment, a blend of different lengths of water soluble polyvinyl alcohol fibre at high temperatures with one type of rigid non-water soluble fibre is used in combination with the specific cement material to achieve blocking effect. The composition can be designed to be removed whenever is needed by acid. The acid is preferably hydrochloric acid at 15% concentration.

In another embodiment, a blend of inorganic fibre with one type of rigid water insoluble fibre is used in combination with the specific cement material to achieve blocking effect. The composition can be removed with acid. The rigid fibre can be used alone, or with any of the organic or inorganic fibres depending on the severity of the problem addressed.

### Mode(s) for Carrying Out the Invention

The cement, water, and optional conventional cement additives and fibres forming the compositions of the invention provide a pumpable fluid. When set, the composition becomes hard and impermeable. Conventional cement additives are chosen from a selection of antifoaming agents, dispersal agents, fluid loss additives, anti-settling agents, and retarders or accelerators and the like.

The fibres suitable for use in this invention can be selected from organic and inorganic fibres.

The inorganic fibres can comprise mineral fibres largely composed of CaO and SiO₂ coated with a monomolecular film of specially formulated surfactant to ease the separation of fibres. Magma fibre is one such fibre available in this category. Magma fibre is provided by Lost Circulation Specialists, Inc. It is acid soluble at any temperature and resistant to the highest temperatures in the reservoir section.

Suitable organic fibres, which are biodegradable, are polyvinyl alcohol fibres, which also belong to a group of biodegradable organic fibres. Polyvinyl alcohol fibres are either water soluble or water insoluble, but both types of fibre dissolve in acid at specific temperatures and are soluble in 15% HCI in reservoir temperature. Such polyvinyl alcohol fibres can be provided by Kuraray.

In one embodiment, the fibre used with the cement slurry can comprise only water insoluble polyvinyl alcohol fibre with an average length of 12 mm and 200 micron in diameter, tensile strength of 1.0 GPA, modulus equal to 30 GPa and young modulus of 29 KN/mm².

In another embodiment, a blend of organic and inorganic fibres can be used. The blend can comprise a combination of regular magma fibre and rigid non-water soluble polyvinyl alcohol fibres with a length of 12 mm. The length of the rigid water insoluble polyvinyl alcohol fibre can be 10 mm or 15 mm. The average diameter of the magma fibre is 7 to 10 micron with a range of 5 to 15 micron in diameter. The length of the regular magma fibre are from 4 to 20 mm with and average length of 10 to 16 mm.

In another embodiment, a blend of organic fibres with different lengths can be used. The blend can comprise two water soluble fibres in two different lengths available with water solubility in the temperature range of 20 to 95 degree centigrade, and one water insoluble fibre. In the cement systems this temperature range increases due to the higher temperature solubility in water.

The preferred blends of fibres contains two fibres with lengths of 1.5mm and 4 - 6 mm for PVA water soluble fibres and 12 mm for the water insoluble polyvinyl alcohol fibre.

The set cement obtained from the composition according to this invention can typically be dissolved by acid, for example 15% HCI aqueous solution.

A high particle content in the composition along with an appropriate combination of fibres can help assure the obstruction of the loss zone. High viscosity can help to decreases the penetration of the composition into the loss zone and a low yield point assures pumpability. The stability of such a composition can be particularly suitable for horizontal well applications.

The compositions should preferably contain particles comprising 25 to 70 % by weight of cement , with an average particle size of 300 to 1200 micron. If the composition is to be acid soluble the large particles can be acid soluble particles selected from magnesium carbonate, calcium carbonate, marble, and dolomite.

To achieve lower densities, microspheres can be used.

Table 1 below shows typical composition analysis of Magma fibre suitable for use in the invention.

**Table 1**

| Composition | %Weight |
|---|---|
| SiO₂ | 38-42 |
| Al₂O₃ | 9-11 |
| CaO | 30-35 |
| MgO | 9-11 |
| Fe₂O₃ | 6-10 |
| Total Alkalines as Na₂O | 1 - 2 |
| SO₃ | 0.5 or less |
| pH in water | 7-8 |
| Loss in ignition | Less than 0.5 |
| %water soluble | Less than 0.2 |
| Water soluble sulphate | Less than 0.05 |
| Melting point | 2400 degF |

### Experimental Examples and Data

The following examples 1-4 are provided for further description of the invention.

A number of acid soluble cement compositions are prepared and the acid soluble fibre and the polyvinyl alcohol fibres are added to each composition either alone or in combination. The blockability of the slurries is investigated using a syringe test and in lost circulation experiments. The lost circulation tests are as described in SPE 84617 and further include a modified test in which the plate with a 2mm slit is replaced with a block having a 2mm slit such that the slit has significant depth when compared to the conventional plate. The compositions are completely acid soluble.

### EXAMPLE 1

A cement composition is formed containing a blend of Portland cement, and 100% by weight of cement (BWOC) a mixture of 25 mesh marble (calcium carbonate), and calcium carbonate of 10 micron particle size in which 64% of the calcium carbonate content is coarse particle and 36% fine particle. The density can be adjusted by using microspheres to densities as low as 14 ppg. Other chemical additives are added in the formulation in order to prepare slurry with zero free water and API fluid loss of below 60 ml.
- Slurry without fibres is tested in a lost circulation cell and no blockage can be observed in a conventional and modified 2 mm slit. Fluid passes through the slit completely.
- 2 lb/bbl of magma fibre and 2 lb/bbl of polyvinyl alcohol fibres of 12 mm length are mixed in the slurry. 385 mL of slurry is poured into the lost circulation cell. Under 10 bar differential pressure for a duration of 30 minutes, the conventional and modified 2 mm slits are blocked by the slurry after a few drops initially pass though the slit.

### EXAMPLE 2

The same cement blend as is used in Example 1 is used..
- 1 lb/bbl of polyvinyl alcohol fibres of length 1.5 mm, 1 lb/bbl of polyvinyl alcohol fibres of length 6 mm, and 2 lb/bbl of water insoluble polyvinyl alcohol fibres of length 12 mm are mixed in the slurry. 385 mL of the slurry is poured into the lost circulation cell. Under 10 bar differential pressure, the modified 2 mm slit is immediately blocked by the slurry.
- 0.5 lb/bbl polyvinyl alcohol fibres of length 1.5 mm, 0.5 lb/bbl polyvinyl alcohol fibres of length 6 mm length and 2 lb/bbl water insoluble polyvinyl alcohol fibres of 12 mm length are mixed in the slurry. 385 mL of slurry is poured into the lost circulation cell. Under 10 bar differential pressure, the slurry passes through the modified 2 mm slit immediately.

### EXAMPLE 3

A cement composition containing a blend of Portland cement and 100% BWOC calcium carbonate (d50 = 65 micron with 15.8 ppg density) is prepared.
- 1 lb/bbl of polyvinyl alcohol fibres of length 1.5 mm, 1 lb/bbl of polyvinyl alcohol fibres of length 6 mm and 2 lb/bbl of water insoluble polyvinyl alcohol fibres of length 12 mm are mixed in the slurry. 385 mL of the slurry is poured into a lost circulation cell. Under 10 bar differential pressure, the modified 2 mm slit is immediately blocked by the slurry.
- 0.5 lb/bbl polyvinyl alcohol fibres with 1.5 mm length, 0.5 lb/bbl polyvinyl alcohol fibres with 6 mm length and 2 lb/bbl water insoluble polyvinyl alcohol fibres with 12 mm length are mixed. 385 mL of slurry is poured in the lost circulation cell. Under 10 bar differential pressure, the slurry passes through the modified 2 mm slit immediately.

### EXAMPLE 4

A cement composition is formed containing a blend of Portland cement, 100% BWOC of a mixture of calcium carbonate sterling beads (mesh 25) as coarse material, and fine calcium carbonate with an average particle size of 10 microns with 64% of the calcium carbonate particles as coarse particles and 36% as fine particles. The density can be adjusted by using microspheres to densities as low as 14 ppg.
- The slurry is mixed with 1.3 lb/bbl magma fibre and 1.3 lb/bbl water insoluble polyvinyl alcohol fibres with lengths of 12 mm. 385 mL of slurry is poured into the lost circulation cell. Under 10 bar differential pressure, the 1 mm slit is immediately blocked by the slurry. The amount of lost fluid is 4.16 mL.
- The slurry is mixed with 1.3 lb/bbl magma fibre and 1.3 lb/bbl water insoluble polyvinyl alcohol fibres with lengths of 12 mm. 385 mL of slurry is poured into the lost circulation cell. Under 10 bar differential pressure, the 2 mm slit is immediately blocked. The amount of lost fluid is 9.7 mL.
- The slurry is mixed with 1.3 lb/bbl magma fibre and 1.3 lb/bbl water insoluble polyvinyl alcohol fibres with lengths of 12 mm. 385 mL of slurry is poured into the lost circulation cell. Under 10 bar differential pressure, all the fluid is lost through the 5 mm slit.

The examples given above indicated the variations that can be made while staying within the scope of the invention. Other changes will be apparent.

## Claims

1. A cement composition comprising a mixture of a blend including cement and/or micro cement, coarse particles, fibres; fine and coarse carbonate particles and water;
wherein the coarse particles comprise at least one material with an average particle size of 300-1200 microns.

2. A composition as claimed in claim 1, wherein the coarse particles comprise sand, granular weighing agent solids, lightweight particles, carbonates or mixtures thereof.

3. A composition as claimed in claim 2, wherein the composition optionally contains fine particles and is acidizable, wherein the coarse and/or fine particles comprise carbonates and the weight ratio of carbonate to cement in the blend is 1:1 to 2:1.

4. A composition as claimed in claim 2 or 3, wherein the carbonates comprise calcium carbonate, marble, magnesium carbonate, dolomite or mixtures thereof.

5. A composition as claimed in any preceding claim, wherein the fibres comprise organic and/or inorganic fibres.

6. A composition as claimed in claim 5, wherein the organic fibres comprise polylactide fibres, water soluble polyvinyl alcohol fibres, water-insoluble polyvinyl alcohol fibres, or mixtures thereof.

7. A composition as claimed in claim 6, comprising water-insoluble polyvinyl fibres having a diameter of 0.2 mm to 0.66 mm and a length of 12 mm to 20 mm.

8. A composition as claimed in claim 6, comprising polyvinyl alcohol fibres having a length of 1.5 mm to 6 mm that are water-soluble at temperatures of 20 to 100 degC.

9. A composition as claimed in claim 8, wherein the fibres have water solubility in the temperature range of 90 to 100 degrees Celsius.

10. A composition as claimed in any preceding claim, wherein organic fibres are present in an amount up to 7 lb/barrel.

11. A composition as claimed in claim 5, wherein the inorganic fibres are present in an amount of up to 10 lb/barrel.

12. A composition as claimed in claim 5 or 11, wherein the inorganic fibres comprise mineral oxide fibres.

13. A composition as claimed in claim 12, wherein the mineral oxide fibres are coated with a monomolecular film of surfactant.

14. A composition as claimed in claim 12 or 13, wherein the mineral oxide fibres comprise calcium oxide (CaO) and/or silicon dioxide (SiO₂) fibres.

15. A composition as claimed in claim 12, 13 or 14, wherein the length of the mineral oxide fibres is 0.1 mm to 16 mm

16. A composition as claimed in claim 15, wherein the length is 10 to 16 mm.

17. A composition as claimed in any of claims 12-16, wherein the mineral oxide fibres have an average diameter of 7 to 10 microns.

18. A composition as claimed in any preceding claim, wherein the organic fibre is acidizable and biodegradable and mineral fibre is acidizable.

19. A method of treating a well, comprising pumping a composition as claimed in any preceding claim into the well and allowing it to set.

20. A method of making a composition as claimed in any of claims1-18, comprising preparing a blend without fibres, mixing the blend with water to form a slurry and adding polyvinyl alcohol fibres in an amount of 1 to 3 lb/barrel of the final slurry.

21. A method of making a composition as claimed in any of claims 1-18, comprising preparing adding the components of the blend to form a mixture, wherein mineral oxide fibres are added before the addition of cement.
